(19) Europäisches Patentamt
European Patent Office
Office européen des brevets

(11) Publication number : 0 680 981 A1

# (12) EUROPEAN PATENT APPLICATION

(21) Application number : 95106947.5

(22) Date of filing : 08.05.95

(51) Int. Cl.$^6$ : **C08G 18/42,** C08G 18/46

(30) Priority : 06.05.94 IT TO940367

(43) Date of publication of application : 08.11.95 Bulletin 95/45

(84) Designated Contracting States : AT BE CH DE DK ES FR GB GR IE IT LI LU MC NL PT SE

(71) Applicant : C.O.I.M. S.p.A.
Via Manzoni 28/32
I-20019 Settimo Milanese, Milano (IT)

(72) Inventor : Frigo, Roberto, c/o C.O.I.M. S.p.A.
Via Manzoni 28/32
I-20019 Settimo Milanese, (Milano) (IT)
Inventor : Bellini, Giovanni, c/o C.O.I.M. S.p.A.
Via Manzoni 28/32
I-20019 Settimo Milanese, (Milano) (IT)

(74) Representative : Rambelli, Paolo et al
c/o JACOBACCI & PERANI S.p.A.
Corso Regio Parco, 27
I-10152 Torino (IT)

## (54) Preparation of rigid polyurethane foams with the use of polyol polyesters.

(57) A process for the production of rigid polyurethane foams by the reaction of an isocyanate with a reactive mixture including a polyol (poly)ester in the presence of a foaming agent, in which the reactive mixture includes one or more aromatic or aliphatic polyol (poly)esters having a functionality of more than 2.8 and a hydroxyl number greater than 350 mg KOH/g. The use of a reactive mixture based on the said polyol (poly)esters improves the fire resistance of the foams, while maintaining good physical and mechanical properties.

EP 0 680 981 A1

The present invention relates to the production of rigid polyurethane foams obtained by the reaction of an isocyanate with a reactive mixture including polyol polyesters in the presence of a foaming agent.

The need to eliminate the use of chloroflurocarbons (CFCs) for environmental reasons has focused the energies and resources of industry on finding possible alternative products and technologies for applications in which these are used.

In rigid polyurethane foams, CFCs are used not only as physical expanding agents but also as functional components, particularly for their contribution to thermally insulating capacities; the chlorine content of the molecule, being liberated in the event of fire, reduces the capacity for flame propagation.

The alternatives to CFCs which are currently in use are an increased water content which, by reacting with the isocyanate, causes $CO_2$ to be evolved and the use of replacement physical expanding agents such as n-pentane and HCFC 141b. These new solutions have made it difficult to maintain the balance needed between the mechanical characteristics of the polyurethane foams and to satisfy fire-resistance regulations as required by the building sector. The technical options adopted have been an increase in the content of flame-proof additives based on bromine and phosphorus and the adoption of polyisocyanurate (PIR) systems.

In addition to their high cost, flame-proof additives - if used in high percentages - also have a plasticising action which has a harmful effect on the mechanical characteristics of the foam. It is important to stress, moreover, that the objective of continual environmental improvement will bring about a need for halogen-free systems on the market.

The PIR systems enable foams to be obtained with good fire-proofing characteristics but which are very friable; systems so formulated are, moreover, critical as regards their processability.

Recently polyol polyesters that are inexpensive - in that they are based on residues obtained from the production of dimethyl terephthalate (DMT) and on materials from the recovery of PET - have been used in the formulation of rigid polyurethane foams (PUR) and polyisocyanurate foams (PIR). Although the use of such polyol polyesters, which are characterised by a low functionality (2-2.5) and hydroxyl numbers in the region 330 to 400mg KOH/g, results in an improvement in the fire resistance of the foams obtained, they also have an adverse effect on the dimensional stability of these foams. For this reason, in PUR technology, these polyol polyesters are used solely in mixtures with polyesters and in a ratio of 30 to 35% by weight at the most.

The object of the present invention is to provide polyol (poly)esters which enable dimensionally stable rigid polyurethane foams to be obtained with improved fire-resistance properties and low friability, by means of PUR or PIR technology.

Another object of the invention is to provide polyol (poly)esters which enable rigid foams to be obtained with the improved properties specified above while at the same time reducing the use of flame-proofing additives and with the use of foaming systems which do not include chlorofluorocarbons.

For this purpose, the present invention provides a process for the production of rigid polyurethane foams by the reaction of an isocyanate with a reactive mixture including a polyol (poly)ester in the presence of a foaming agent, characterised in that the reactive mixture includes one or more aromatic or aliphatic polyol (poly)esters having a functionality greater than 2.8 and a hydroxyl number greater than 350mg KOH/g and in that said foaming agent is selected from pentanes, HCFC, HFC and $CO_2$.

Preferably the polyol (poly)esters used in the invention have a functionality of between 3 and 4 and a hydroxyl number of from 350 to 800, more preferably between 450 and 600 mg KOH/g. Preferably the polyol (poly)esters used in the invention have an acid number between 0.5 and 40 mg KOH/g and more preferably between 4 and 20.

The aliphatic or aromatic polyol (poly)esters used in the invention preferably correspond to the following structural formulae:

$$(HO)_nR - 00C - A - C00 - R(OH)_n \qquad (I)$$

$$(HO)_nR - 00C - A - C00 - R_1(OH)_m - C00 - A - C00 - R(0H)_n \qquad (II)$$

$$\begin{array}{c} C00 - R(0H)_n \\ | \\ (HO)_nR - 00C - A_I - C00 - R(OH)_n \end{array}$$

in which $R(0H)_n$ and $R_1(0H)_m$ are radicals of a polyol selected from glycols, polyalcohols or alkanolamines preferably having from 1 to 6 carbon atoms and preferably having a hydroxyl number n of from 1 to 5 or m of from 1 to 4 respectively, which may be the same as or different from each other in the same molecule and in which:

$$- OOC - A - COO -$$

and

$$-\ OOC\ -\ \overset{\displaystyle COO\ -}{\overset{|}{A_1}}\ -\ COO\ -$$

are the bivalent or trivalent groups respectively of an aliphatic or aromatic dibasic or tribasic acid respectively, it being understood that these groups may be the same as or different from each other in the molecule of formula (II).

The polyol polyesters are prepared by a conventional esterification reaction between a polyol or mixture of polyols and polycarboxylic acids or their mixtures. The polyols are preferably selected from glycols such as ethylene glycol, propylene glycol, dipropylene glycol, diethylene glycol; polyalcohols such as glycerol, pentaerithritol, trimethylolpropane, sorbitol and mannitol; alkanolamines, such as triethanolamine and hexamethylolmelamine, as well as the said polyalcohols to which propylene oxide has been added and their mixtures.

The acids used in the invention, in combination with the polyols listed above, are preferably selected from adipic, glutaric, succinic acids, terephthalic anhydride, isophthalic acid, terephthalic acid, trimellitic anhydride, it being understood that mixtures of these acids may be used.

In order to improve the flowability of the polyurethane foams, the polyesters particularly preferred are those with secondary hydroxyl groups preferably obtained by the esterification of polyalcohols with secondary hydroxyl groups, particularly propylene glycol and dipropylene glycol, glycerol and sorbitol alone or preferably with the addition of propylene oxide, with dicarboxylic or tricarboxylic acids.

The products of the esterification of alkanolamines with glycols selected from the group listed above which result in the formation of self-reacting polyol polyesters are also advantageous.

The present invention also encompasses the use, as the polyol for the production of polyurethanes, of esters obtained by the reaction of fatty acids or hydroxyacids having from 12 to 24 carbon atoms with glycols or polyalcohols selected from the group mentioned above. Particularly preferred for this purpose are lauric, ricinoleic and 12-hydroxystearic acids and mono-, di- and tri-esters obtained therefrom by reaction with sorbitol. Polyol mono-esters, although not strictly being definable as polyesters, fall within the scope of the present invention as long as their functionality and hydroxyl numbers fall within the values stated above.

It has been found that the products of the reaction of sorbitol with fatty acids, and particularly sorbitan monolaurate, may, to advantage, be used as the polyol in the production of polyurethane foams and, moreover, their presence adds a surfactant effect and a compatability with the foaming agent, particularly when this is pentane.

The choice of the various types of acids and polyalcohols, in addition to determining the functionality and hydroxyl number together with the aromatic or aliphatic character of the polyol (poly)ester, also has a direct influence on the viscosity which, for ease of use and to allow the foaming process to be carried out either at high or low pressure, should not exceed 1500 cP at 25°C. The mixtures of various acids and alcohols also enable the intrinsic reactivity of the polyol polyester and its compatability with the isocyanate, the fire-resistance of the resulting foam and its friability both on the surface and within the body to be varied. More particularly, triethanolamine-based polyol polyesters have been shown to have an intrinsic characteristic of self reactivity towards the isocyanate. The use of sorbitol esters, which form rings during the esterification, improves the reactivity curve of the resulting polyol polyester during the formation of the polyurethane foam.

For the production of polyurethane foams, the polyol polyesters described above - including the polyol monoesters described previously - preferably constitute the totality of the reactive mixture reacted with the isocyanate; it is understood, however, that these polyols could also be used mixed with polyol polyethers conventionally used in the art: preferably the reactive polyol-based mixture includes at least 40% by weight of the polyol polyesters described above.

In the production of the rigid polyurethane foams, conventional isocyanates may be used, these being selected from toluene diisocyanate (TDI), 4,4'-methylene-bis-(phenylisocyanate) (MDI), polymeric phenyl-methylisocyanate (PMDI) and others normally available on the market. The reaction for forming the foam is carried out in the presence of conventional catalysts: the preferred form of catalysis uses synergic "blowing" catalysts (for example DABCI $A_1$ of Air Products) in that the polyols used in the invention are generally more reactive than polyethers. By way of example, the total quantity of catalyst needed is about 30 - 40% less than that normally used.

The preferred foaming agents for forming the foam are pentanes, HCFC, HFC and $CO_2$, particularly n-pentane, cyclopentane, HCFC 141b and HFC 134A.

It has been found that, with PUR systems using the polyol polyesters of the invention, it is possible to maximise the fire resistance to obtain Class B2 foams, in accordance with DIN 4102, without halogens and with the use both of HCFC 141b and n-pentane as the foaming agent.

The good fire resistance conferred by the polyol polyesters reduces the need for high isocyanate indices in PIR systems, thus improving considerably their well known criticality as regards processability (aging and flowability) and adhesion to rigid surfaces (friability).

Examples of the preparation of polyol polyesters

The esterification was carried out by the fusion method.

The polyol or mixture of polyols and the carboxylic acid or acids were loaded into the reactor and brought to a temperature of about 150 - 160°C under agitation. They were kept under agitation while the water of esterification was distilled off and the temperature was gradually allowed to rise to about 220°C, the temperature at the head of the distillation column being controlled so as not to exceed 100°C to avoid loss of the polyols.

The reaction was continued under these conditions until the desired acidity value had been reached; vacuum was applied while the temperature was maintained at 200 - 220°C until a residual moisture content of about 0.5% was achieved and then the product obtained was cooled and discharged.

Example 1

49.3 parts of adipic acid and 62.8 parts of glycerol were reacted by the method described above. A polyol polyester was obtained with the following characteristics:
appearance: viscous liquid
colour: max 3 Gardner
functionality: 4
acidity in mg KOH/g: 10
hydroxyl number in mg KOH/g: 760 ± 25
viscosity at 25°C in cP : 9700 ± 700.

The product was an aliphatic polyester with a high functionality, particularly useful as a branching polyol, preferably used in mixtures with other polyol polyesters or polyethers, the percentage used preferably being between 10 and 30% by weight with reference to the reactive mixture.

Example 2

12.1 parts of phthalic anhydride and 32.8 parts of a commercial AGS mixture of adipic acid, glutaric acid and succinic acid with 42.2 parts of diethylene glycol and 19 parts of glycerol were reacted by the method described above. A polyester was obtained with the following characteristics :
appearance: viscous liquid
colour: max 8 Gardner
functionality: 3
acidity in mg KOH/g: 4
hydroxyl number in mg KOH/g: 550 ± 20
viscosity at 25°C in cP : 3500 ± 500.

The polyol polyester thus obtained may be used as a single polyol or in mixtures with other polyol polyesters according to the invention to obtain a foam with very good fire resistance together with high dimensional stability.

Example 3

28.1 parts of phthalic anhydride and 16.9 parts of the said mixture of adipic, glutaric and succinic acids with 33.5 parts of diethylene glycol and 29.4 parts of glycerol were reacted by the method described above.

A polyol polyester was obtained with the following characteristics:
appearance: viscous liquid
colour: max 8 Gardner
functionality: 3
acidity in mg KOH/g: 6
hydroxyl number in mg KOH/g: 530 ± 20
viscosity at 25°C in cP : 11000 ± 800.

Example 4

12.2 parts of phthalic anhydride and 33 parts of the said mixture of adipic, glutaric and succinic acids with 44.2 parts of dipropylene glycol and 21 parts of glycerol were reacted by the method described above.

A polyol polyester was obtained with the following characteristics:
appearance: viscous liquid
functionality: 3
acidity in mg KOH/g: 5
hydroxyl number in mg KOH/g: 380 ± 20.

Example 5

14.2 parts of phthalic anhydride and 38.4 parts of the said mixture of acids with 22.2 parts of diethylene glycol and 19 parts of glycerol were reacted by the method described above.

A polyol polyester was obtained having the following characteristics:
appearance: viscous liquid
colour: max 8 Gardner
functionality: 3
acidity in mg KOH/g: 4
hydroxyl number in mg KOH/g: 370 ± 20
viscosity at 25°C in cP : 4900 ± 500

The polyester obtained is preferably used in mixtures with other polyol polyesters according to the invention in PUR and PIR foams; it also allows PIR systems to be formulated with low isocyanate indices, while maintaining good mechanical characteristics and offering good processability.

Example 6

37.2 parts of the said mixture of acids with 37.4 parts of dipropylene glycol and 35.5 parts of triethanolamine were reacted by the method described above.

A polyol polyester was obtained having the following characteristics:
functionality: 3
acidity in mg KOH/g: 9
hydroxyl number in mg KOH/g: 380 ± 20
viscosity at 25°C in cP : 3000

Example 7

43.1 parts of the said mixture of acids with 40.3 parts of diethylene glycol and 45.3 parts 70% sorbitol were reacted by the method described above.

A polyol polyester was obtained having the following characteristics
functionality: 3.5
acidity in mg KOH/g: 15
hydroxyl number in mg KOH/g: 495
viscosity at 25°C in cP : 11000

The properties of the polyol polyesters according to Examples 1 to 7 were evaluated in the preparation of rigid polyurethane foams with laboratory testing with the use, as the isocyanate, of the phenyl-methan-isocyanate polymer (PMDI) commonly used for this purpose.

The reactive mixture had the following composition:
polyol polyester: 100 parts by weight
flame retardant (% phosporous): 1-2
DMCA catalyst %: 1-2
silicone surfactant %: 1-2
water: 1.5-2 parts by weight
foaming agent HCFC 141b: 12-15 parts by weight
isocyanate index (PMDI):110

The isocyanate was reacted with the reactive mixture previously prepared and the resulting foam was analysed in specific tests for the evaluation of its dimensional stability, structure, friability, fire resistance, flowability and adhesion.

The table below gives the comparative values of the characteristics of the foams obtained:

| Polyol | dimensional stability | Structure | Friability | Fire Resist | Flowability | Adhesion |
|---|---|---|---|---|---|---|
| Ex. 1 | +++ | -- | - | ++ | -- | ++ |
| Ex. 2 | ++ | + | ++ | +++ | - | +++ |
| Ex. 3 | ++ | +++ | +++ | ++ | - | ++ |
| Ex. 4 | + | ++ | ++ | - | +++ | +++ |
| Ex. 5 | + | + | ++ | + | + | ++ |
| Ex. 6 | + | ++ | +++ | + | +++ | ++ |
| Ex. 7 | ++ | ++ | + | ++ | ++++ | ++ |

The same polyols of examples 1 to 7 were used for the production of rigid polyurethane foams with the use of n-pentane as the foaming agent.

The reactive mixture had the following composition:
polyol: 100 parts
catalyst DMEA/A1 70:30: 2-3 parts
DMMP: 12 parts
silicone: 1.5-2 parts
water: 3-4 parts
n-pentane: 5-9 parts
isocyanate index (PMDI): 110-120.

Stable foams were obtained having low or no friability with a fire resistance according to DIN 4102 B2 of 10 to 11 cm.

## Claims

1. A process for the production of rigid polyurethane foams by the reaction of an isocyanate with a reactive mixture including a polyol (poly)ester in the presence of a foaming agent, characterised in that the reactive mixture includes one or more aromatic or aliphatic polyol (poly)esters having a functionality greater than 2.8 and a hydroxyl number greater than 350 mg KOH/g and in that said foaming agent is selected from pentanes, HCFC, HFC and $CO_2$.

2. A process according to Claim 1, in which the polyol has a functional capacity of from 3 to 4 and a hydroxyl number of from 350 to 800 mg KOH/g.

3. A process according to Claim 1 or Claim 2, in which the polyol or mixture of polyols has a hydroxyl number of from 450 to 600 mg KOH/g.

4. A process according to any one of the preceding claims, in which the polyol (poly)ester or their mixtures is selected from compounds corresponding to the general formulae:

$$(HO)_nR - 00C - A - C00 - R(OH)_n \qquad (I)$$

$$(HO)_nR - 00C - A - C00 - R_1(OH)_m - C00 - A - C00 - R(0H)_n \qquad (II)$$

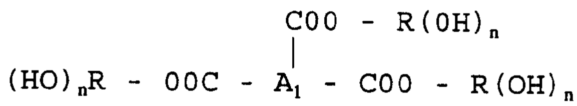

in which $R(0H)_n$ and $R_1$ $(0H)_m$ are radicals of a polyol selected from glycols, polyalcohols or alkanolamines having from 1 to 6 carbon atoms and a hydroxyl number n of from 1 to 5 or m of from 1 to 4 respectively, which may be the same as or different from each other in the same molecule and in which

- 00C - A - C00 -

and

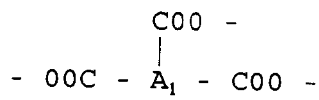

are the bivalent or trivalent groups respectively of an aliphatic or aromatic dibasic or tribasic acid respectively, in the molecule of formula (II) these groups being the same as or different from each other.

**5.** A process according to Claim 4, in which the polyols corresponding to the $R(OH)_n$ and $R_1$ $(OH)_m$ groups are selected from the group which consists of ethylene glycol, propylene glycol, dipropylene glycol, diethylene glycol, glycerol, pentaerithritol, trimethylolpropane, sorbitol, mannitol, triethanolamine and hexamethylolmelamine.

**6.** A process according to Claim 4 or Claim 5, in which the acid is selected from the group consisting of adipic, glutaric, succinic acids, terephthalic anhydride, isophthalic acid, terephthalic acid, trimellitic anhydride and their mixtures.

**7.** A process according to any one of Claims 4 to 6, in which the polyol polyester comprises the product of the reaction of an alkanolamine with a glycol or sorbitol.

**8.** A process according to any one of the preceding claims, in which the reactive mixture includes a polyol ester constituted by the product of the reaction of sorbitol with fatty acids or hydroxyacids having from 12 to 24 carbon atoms.

**9.** A process according to any one of the preceding claims, in which the polyol polyester or their mixture has a viscosity of no more than 15000 cP at 25°C.

**10.** A process according to any one of the preceding claims, in which said polyol has an acidity value from 0.5 to 40 mg KOH/g preferably from 4 to 20.

**11.** A process according to any one of the preceding claims, in which the polyol polyester or their mixture constitutes the totality of the reactive mixture.

**12.** A process according to any one of Claims 1 to 10, in which the reactive mixture further includes a polyol polyether or a mixture of polyol polyethers.

**13.** A composition based on polyol polyesters, for use in the preparation of rigid polyurethane foams, characterised in that it includes a polyol polyester or mixture thereof, as described in any one of the preceding claims.

European Patent Office

# EUROPEAN SEARCH REPORT

Application Number
EP 95 10 6947

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 161 039 (ICI)<br>* page 1, line 28 - page 4, line 30 *<br>* page 4, line 7 - line 9; claim 1 *<br>--- | 1,2 | C08G18/42<br>C08G18/46 |
| X | US-A-4 642 319 (MCDANIEL)<br>* column 2, line 43 - column 6, line 52 *<br>* column 4, line 60 - line 65 *<br>* column 6, line 39 - line 49; claims; example 3 *<br>--- | 1,2 | |
| X | CA-A-1 223 390 (ALTOUNIAN)<br>* page 4, line 26 - page 8, line 27 *<br>* page 9, line 9 - line 13; claims 1-6,9; examples 5,6,10,12 *<br>--- | 1,2 | |
| X | EP-A-0 002 768 (BASF)<br>* page 7, line 5 - line 16; claims 1,2 *<br>--- | 1 | |
| X | US-A-4 442 237 (ZIMMERMAN ET AL)<br>* column 2, line 66 - column 6, line 20; claims; examples *<br>--- | 1,5 | TECHNICAL FIELDS SEARCHED (Int.Cl.6) |
| A | CHEMICAL ABSTRACTS, vol. 110, no. 12, June 1989, Columbus, Ohio, US;<br>abstract no. 214081r,<br>CEAUSESCU ET AL 'POLYESTERS FOR POLYURETHANES'<br>* abstract *<br>& REV. ROUM. CHIM.,<br>vol.34, no.2, 1989, BUCHAREST, ROMANIA<br>pages 437 - 443<br>CEAUSESCU ET AL<br>----- | | C08G |

The present search report has been drawn up for all claims

| Place of search | Date of completion of the search | Examiner |
|---|---|---|
| THE HAGUE | 18 August 1995 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)